# EUROPÄISCHE PATENTSCHRIFT

(11) **EP 3 148 854 B1**
(45) Veröffentlichungstag und Bekanntmachung des Hinweises auf die Patenterteilung: **14.03.2018**
(21) Anmeldenummer: 15724612.5
(22) Anmeldetag: 20.05.2015
(51) Int. Cl.: B60T 13/68, B60T 8/32

(54) **ELEKTRONISCH GEREGELTES, ELEKTRO-PNEUMATISCHES BREMSSYSTEM**
ELECTRONICALLY CONTROLLED ELECTRO-PNEUMATIC BRAKE SYSTEM
SYSTÈME DE FREINAGE ÉLECTROPNEUMATIQUE À RÉGULATION ÉLECTRONIQUE

(30) Priorität: 26.05.2014 DE 102014107399
(43) Veröffentlichungstag der Anmeldung: 05.04.2017
(73) Patentinhaber: KNORR-BREMSE Systeme für Nutzfahrzeuge GmbH, 80809 München (DE)
(72) Erfinder: HERGES, Michael, 80935 München (DE); HECKER, Falk, 71706 Markgröningen (DE)
(86) Internationale Anmeldenummer: PCT/EP2015/061188
(87) Internationale Veröffentlichungsnummer: WO 2015/181032

(56) Entgegenhaltungen:
- WO-A2-2004/098967
- DE-B3-102005 062 907
- DE-B3-102008 009 043

## Beschreibung

Die Erfindung geht aus von einem elektronisch geregelten, elektro-pneumatischen Bremssystem (EBS) für Fahrzeuge gemäß dem Oberbegriff von Anspruch 1.

Ein elektronisch geregeltes, elektro-pneumatisches Bremssystem (EBS), wie es beispielsweise in DE 42 27 084 B4 beschrieben wird, beinhaltet in der Regel ein Fußbremsmodul, welches in einem oder mehreren Kanälen durch Sensoren den Fahrerbremswunsch erfasst und dem Fahrerbremswunsch entsprechendes Bremsanforderungssignal in ein zentrales elektronisches Steuergerät einsteuert, welches auf der Basis des Bremsanforderungssignals Bremssollwerte repräsentierende Signale für die Betriebsbremssteuerkreis, z.B. Vorderachsbremskreis und Hinterachsbremskreis erzeugt. Parallel hierzu werden in dem Fußbremsmodul für jeden Betriebsbremssteuerkreis pneumatische Steuerdrücke für den Fall erzeugt, dass die elektrische Regelung ausfällt.

Das zentrale Steuergerät steuert basierend auf dem Bremssollwert elektro-pneumatische Druckregelmodule (EPM oder DRM) elektrisch an, welche die Schnittstelle zwischen den elektrischen Bremssollwerten und der pneumatischen Bremskraft bilden. Sie setzen die elektrischen Bremssollwerte des zentralen Steuergeräts in pneumatische Drücke um. Die Umsetzung erfolgt mit Proportionalmagneten oder mit einer Kombination von Ein-/Auslassmagnetventilen. Ein integrierter Drucksensor misst den vom Druckregelmodul (EPM oder DRM) ausgesteuerten Bremsdruck. Somit kann eine Bremsdruckregelung in einem geschlossenen Regelkreis stattfinden. Ein in das Druckregelmodul (EPM oder DRM) integriertes, elektrisch gesteuertes Backup-Ventil sperrt die vom Fußbremsmodul parallel zu den elektrischen Bremsanforderungssignalen erzeugten pneumatischen Steuerdrücke des Fußbremsmoduls ab, um eine hiervon nicht beeinflusste elektrische Druckregelung zu ermöglichen. Unter "elektro-pneumatisch" wird im folgenden eine Einheit verstanden, in welche elektrische Steuersignale eingesteuert werden, um diese in pneumatische Signale bzw. Steuerdrücke bzw. Bremsdrücke umzusetzen.

Bei einem für den Anhängerbetrieb vorgesehenen Zugfahrzeug ist weiterhin im Zugfahrzeug ein elektro-pneumatisches Anhängersteuermodul vorhanden, welches eine Steuerung oder Regelung des Anhängerbremsdrucks ermöglicht. Das Umsetzen des elektronisch vorgegebenen Sollwerts in einen ausgesteuerten Druck erfolgt dabei mit einer ähnlichen Magnetventilanordnung wie in einem oben beschriebenen Druckregelmodul. Das Ansteuern des Anhängersteuermoduls muss mit zwei unabhängigen Steuersignalen erfolgen. Diese können beispielsweise ein elektrisches Signal und ein pneumatisches Signal sein.

Bei solchen bekannten elektronisch geregelten, elektro-pneumatischen Bremssystemen (EBS) wird die gesetzlich geforderte Zweikreisigkeit daher entweder durch einen elektrischen und einen pneumatischen Kreis (1e/1p) oder durch einen elektrischen und zwei pneumatische Kreise (1e/2p), jeweils unabhängig voneinander, dargestellt. Dies bedingt allerdings ein Fußbremsmodul (FBM), das aus der Bremspedalbetätigung des Fahrers sowohl ein elektrisches Steuersignal als auch in wenigstens einem pneumatischen Kanal einen pneumatischen Steuerdruck erzeugt. Dazu müssen allerdings eine pneumatische Verrohrung zwischen dem Fußbremsmodul (FBM) in der Kabine und den an den Achsen angeordneten Druckregelmodulen (EPM oder DRM) geführt werden, sowie die Druckregelmodulen (EPM oder DRM) sowohl für eine pneumatische als auch elektrische Ansteuerung ausgelegt werden.

Ein gattungsgemäßes elektronisch geregeltes Bremssystem (EBS) ist aus DE 10 2005 062 907 B3 bekannt und besteht demgegenüber lediglich aus zwei unabhängigen elektrischen Bremssteuerkreisen (2e), von welchen jeder Bremssteuerkreis jeweils eine Bremse der Vorderachse und der Hinterachse des Fahrzeugs in Diagonalanordnung ansteuert. Jeder der beiden Bremssteuerkreise beinhaltet ein elektronisches Steuergerät zur Ansteuerung von radnah angeordneten Bremsaktuatoren in Form von Druckregelmodulen. Bei dieser 2e-Architektur sind die zwei getrennte Spannungsversorgungen, Zentralsteuergeräte und ein Fußbremsmodul (FBM) mit zwei getrennten Kanälen (Bremswertgeberkreisen) vorhanden, um zwei unabhängige, elektrische Bremssteuerkreise zu bilden und dadurch eine den gesetzlichen Anforderungen entsprechende zweikanalige Bremssteuerung zu realisieren. Es entfällt daher beim Fußbremsmodul (FBM) die komplette Pneumatik, was zu erheblichen Kosten- und Bauraumeinsparungen führt. Zusätzlich sind in den Druckregelmodulen (EPM) keine Backup-Magnetventile mehr nötig.

Im Einzelnen weist bei dem aus DE 10 2005 062 907 B3 bekannten elektronisch geregelten Bremssystem (EBS) der erste elektrische Bremssteuerkreis einen ersten Kanal eines Fußbremsmoduls, ein erstes elektronisches Steuergerät und erste Druckregelmodule sowie zur Versorgung dieser Komponenten eine erste Energieversorgung und der zweite elektrische Bremssteuerkreis einen zweiten Kanal des elektronischen Fußbremsmoduls, ein zweites elektronisches Steuergerät und zweite Druckregelmodule, sowie eine von der ersten Energieversorgung unabhängige zweite Energieversorgung auf, welche die Komponenten des zweiten elektrischen Bremssteuerkreises mit elektrischer Energie versorgt. Die beiden elektronischen Steuergeräte sind zum Informationsaustausch und Überwachung der Funktionen der beiden Bremssteuerkreise verbunden und ausgebildet. Weiterhin ist das erste Steuergerät an den ersten Kanal des Fußbremsmoduls und das zweite Steuergerät an den zweiten Kanal des Fußbremsmoduls zum Einsteuern von Bremsanforderungssignalen angeschlossen. Das erste Steuergerät steuert erste Druckregelmodule und das zweite Steuergerät zweite Druckregelmodule an, wobei diese jeweils mindestens eine zugeordnete Bremskrafterzeugungseinrichtung in Form von pneumatischen Bremszylindern mit Bremsdruck versorgen. Nicht zuletzt ist ein von dem ersten elektronischen Steuergerät angesteuertes, beispielsweise elektro-pneumatisches Anhängersteuermodul zum Steuern der Anhängerbremse vorgesehen. Bei intakten elektrischen Bremssteuerkreisen werden beide elektrischen Bremssteuerkreise durch eine Betätigung eines Bremspedals parallel aktiviert, d.h. es werden sowohl in dem ersten Steuergerät als auch in dem zweiten Steuergerät jeweils Bremssollwerte für die zugeordneten Druckregelmodule gebildet.

Falls jedoch die Bremssollwerte nicht oder nicht ausschließlich abhängig von den vom Fußbremsmodul ausgesteuerten Bremsanforderungssignalen in den Steuergeräten gebildet werden, sondern auch oder ausschließlich abhängig von Eingriffen durch Steuer- oder Regelsysteme wie Fahrdynamikregelsysteme (z.B. ESP), Brems- und/oder Antriebsschlupfregelungen oder Fahrerassistenzsystemen wie Abstandsregelsysteme, so ist zur Realisierung einer Parallelverarbeitung in beiden Steuergeräten jeweils eine relativ große Rechnerleistung notwendig. Der Kostenvorteil der eingesparten pneumatischen Teile wird daher durch den höheren Steuergeräteaufwand wenigstens teilweise zunichte gemacht.

Demgegenüber besteht die Aufgabe der Erfindung darin, ein elektronisch geregeltes, elektro-pneumatisches Bremssystem (EBS) mit wenigstens zwei elektrischen Bremssteuerkreisen und ohne pneumatische Bremssteuerkreise derart fortzubilden, dass es kostengünstiger realisiert werden kann.

Diese Aufgabe wird erfindungsgemäß durch die kennzeichnenden Merkmale von Anspruch 1 gelöst.

### Offenbarung der Erfindung

Die Erfindung geht aus von einem elektronisch geregelten, elektro-pneumatischen Bremssystem eines Fahrzeugs, mit mindestens zwei elektrischen Betriebsbremssteuerkreisen, wobei
- ein erster elektrischer Betriebsbremssteuerkreis wenigstens einen ersten elektrischen Kanal eines mittels eines Fußbremspedals betätigbaren Fußbremsmoduls, wenigstens ein erstes elektronisches Steuergerät, wenigstens ein mit dem ersten elektronischen Steuergerät steuerbar verbundenes erstes Druckregelmodul sowie eine erste, elektrische Komponenten des ersten elektrischen Betriebsbremssteuerkreises mit elektrischer Energie versorgende elektrische Energieversorgung und ein zweiter elektrischer Betriebsbremssteuerkreis jeweils unabhängig vom ersten elektrischen Betriebsbremssteuerkreis wenigstens einen zweiten elektrischen Kanal des Fußbremsmoduls, wenigstens ein zweites elektronisches Steuergerät, wenigstens ein mit dem ersten elektronischen Steuergerät steuerbar verbundenes zweites Druckregelmodul sowie eine zweite elektrische Energieversorgung aufweist, welche elektrische Komponenten des zweiten elektrischen Betriebsbremssteuerkreises mit elektrischer Energie versorgt, wobei
- das erste elektronische Steuergerät über eine erste Datenverbindung des ersten elektrischen Betriebsbremskreises an den ersten Kanal des elektronischen Fußbremsmoduls und das zweite elektronische Steuergerät an den zweiten Kanal des elektronischen Fußbremsmoduls zum Einsteuern eines fahrerbremswunschabhängigen Bremsanforderungssignals bei einer Betätigung des Fußbremspedals angeschlossen ist, wobei
- das erste elektronische Steuergerät und das zweite elektronische Steuergerät über eine zweite Datenverbindung miteinander verbunden und ausgebildet sind, in den beiden elektrischen Bremssteuerkreisen und in der zweiten Datenverbindung auftretende Fehler zu detektieren, und wobei
- die elektronischen Steuergeräte ausgebildet sind, um wenigstens auf der Basis des fahrerbremswunschabhängigen Bremsanforderungssignals wenigstens einen Bremssollwert für das wenigstens eine erste Druckregelmodul und/oder für das wenigstens eine zweite Druckregelmodul zu erzeugen, und wobei
- die Druckregelmodule jeweils ausgebildet sind, um auf der Basis eines Bremssollwerts einen Bremsdruck zu erzeugen, welcher in jeweils wenigstens einen zugeordneten pneumatischen Betriebsbremszylinder einsteuerbar ist, und wobei
- das zweite elektronische Steuergerät in das Fußbremsmodul integriert ist, und dass
- das erste elektronische Steuergerät ausgebildet ist, dass es auf der Basis des fahrerbremswunschabhängigen Bremsanforderungssignals einen ersten, dem ersten elektrischen Betriebsbremssteuerkreis zugeordneten Bremssollwert und einen zweiten, dem zweiten elektrischen Betriebsbremssteuerkreis zugeordneten Bremssollwert erzeugt, und dass
- das zweite elektronische Steuergerät ausgebildet ist, dass es auf der Basis des fahrerbremswunschabhängigen Bremsanforderungssignals einen weiteren zweiten, dem zweiten elektrischen Betriebsbremssteuerkreis zugeordneten Bremssollwert erzeugt, und dass
- die elektronischen Steuergeräte weiterhin derart ausgebildet sind, dass
- bei intakten elektrischen Betriebsbremssteuerkreisen das erste elektronische Steuergerät
- den ersten Bremssollwert in das wenigstens eine erste Druckregelmodul und den zweiten Bremssollwert über die zweite Datenverbindung in das zweite elektronische Steuergerät einsteuert, über welches der zweite Bremssollwert in das wenigstens eine zweite Druckregelmodul durchgeschleift wird, oder
- den ersten Bremssollwert in das wenigstens eine erste Druckregelmodul und den zweiten Bremssollwert direkt über eine dritte Datenverbindung in das wenigstens eine zweite Druckregelmodul einsteuert, oder
- bei einer Detektion eines Fehlers oder bei Auftreten eines Fehlers in dem ersten elektrischen Bremssteuerkreis und/oder in der zweiten Datenverbindung das zweite elektronische Steuergerät den lediglich auf der Basis des fahrerbremswunschabhängigen Bremsanforderungssignals gebildeten weiteren zweiten, dem zweiten elektrischen zugeordneten Bremssollwert in das wenigstens eine zweite Druckregelmodul einsteuert, oder
- bei einem Fehler in dem zweiten elektrischen Bremssteuerkreis das erste elektronische Steuergerät den ersten Bremssollwert in das wenigstens eine erste Druckregelmodul einsteuert.

Bei dem zuletzt genannten Fall des Auftretens eines Fehlers in dem zweiten elektrischen Bremssteuerkreis steuert daher das intakte erste elektronische Steuergerät den ersten Bremssollwert weiterhin in das wenigstens eine erste Druckregelmodul ein.

Erfindungsgemäß ist vorgesehen, dass von den beiden elektronischen Steuergeräten ausschließlich in dem ersten elektronischen Steuergerät Steuer- und/oder Regelalgorithmen wenigstens eines Steuer- oder Regelsystems teilweise oder vollständig implementiert sind, welche den ersten Bremssollwert und den zweiten Bremssollwert im Sinne der Steuer- und/oder Regelalgorithmen anpassen oder welche einen ersten, dem ersten elektrischen Betriebsbremssteuerkreis zugeordneten Bremssollwert und einen zweiten, dem zweiten elektrischen Betriebsbremssteuerkreis zugeordneten Bremssollwert ohne Berücksichtigung oder ohne Vorhandensein des oder eines fahrerbremswunschabhängigen Bremsanforderungssignals automatisch erzeugen.

Die Begriffe "erster Bremssollwert" und "zweiter Bremssollwert" bedeuten, dass von dem ersten elektronischen Steuergerät beispielsweise für jeden Bremssteuerkreis (z.B. Vorderachsbremskreis, Hinterachsbremskreis) ein eigener Bremssollwert erzeugt bzw. gebildet wird, da beispielsweise in einem ALB-System achslastabhängig gebildeten Bremssollwerte unterschiedlich ausfallen können. Der erste Bremssollwert und der zweite Bremssollwert können bedarfsweise jedoch auch identisch ausfallen.

Damit wird in dem ersten elektronischen Steuergerät auf der Basis des fahrerbremswunschabhängigen Bremsanforderungssignals oder aber auf der Basis der in dem ersten elektronischen Steuergerät teilweise oder vollständig implementierten überlagerten Funktionen wenigstens eines Steuer- oder Regelsystems der erste Bremssollwert und der zweite Bremssollwert angepasst
bzw. ein erster Bremssollwert und ein zweiter Bremssollwert überhaupt gebildet.

Denn insbesondere Steuer- oder Regelsysteme wie Fahrdynamikregelsysteme (z.B. ESP), Hillholdersysteme, Fahrerassistenzsysteme, Abstandsregelsysteme aktivieren die Betriebsbremse (Zuspannen der Betriebsbremse) durch Bildung eines Bremssollwerts für Druckregelmodule ohne dass eine Betätigung des Fußbremspedals des Fußbremsmoduls erfolgt.

Weil die höheren oder überlagerten Funktionen, die von Steuer- oder Regelsystemen wie Fahrdynamikregelsystemen, Bremsschlupfregelsystemen, Antriebsschlupfregelsystemen, Hillholdersystemen, Fahrerassistenzsystemen, Abstandsregelsystemen ausgeführt werden einen gewissen höheren Umfang an "Intelligenz" erfordern, nicht in dem zweiten elektronischen Steuergerät, sondern von den beiden Steuergeräten ausschließlich in dem ersten elektronischen Steuergerät, aber nicht in dem zweiten Steuergerät implementiert sind, ist die zur Verfügung zu stellende Rechnerleistung gegenüber dem eingangs genannten Stand der Technik wesentlich geringer. Insbesondere muss das zweite elektronische Steuergerät diese höhere "Intelligenz" nicht zur Verfügung stellen.

Für einen in dem zweiten elektronischen Steuergerät vorhandenen Mikroprozessor reicht es daher aus, dass er eine niedrigere "Intelligenz" aufweist, die es ermöglicht, lediglich auf der Basis des fahrerbremswunschabhängigen Bremsanforderungssignals einen weiteren zweiten Bremssollwert zu bilden.

Der von dem zweiten elektronischen Steuergerät parallel zu dem vom ersten Steuergerät gebildeten zweiten Bremssollwert gebildete weitere zweite Bremssollwert kommt bei intakten elektrischen Betriebsbremssteuerkreisen bevorzugt nicht zum Tragen bzw. wird unterdrückt, zurückgehalten oder von dem vom ersten elektronischen Steuergerät erzeugten zweiten Bremssollwert überschrieben, da bereits der vom ersten elektronischen Steuergerät gebildete und durch das zweite elektronische Steuergerät durchgeschleifte zweite Bremssollwert in das wenigstens eine zweite Druckregelmodul des zweiten elektrischen Betriebsbremssteuerkreises eingesteuert wird, um dort einen entsprechenden Bremsdruck in den jeweils zugeordneten pneumatischen Bremszylindern zu erzeugen.

Alternativ könnte der weitere zweite Bremssollwert, der von dem zweiten Steuergerät erzeugt wird, auch zur Plausibilisierung des vom ersten Steuergerät erzeugten zweiten Bremssollwerts herangezogen werden, wobei eine gegenseitige Übermittlung der Werte bevorzugt über die zweite Datenverbindung erfolgt.

Demgegenüber wird bei einer Detektion eines Fehlers oder bei Auftreten eines Fehlers in dem ersten elektrischen Bremssteuerkreis wie z.B. eines Fehlers in der ersten elektrischen Energieversorgung, im ersten elektronischen Steuergerät, in der Datenverbindung zwischen dem ersten elektronischen Steuergerät und dem wenigstens einen ersten Druckregelmodul oder in dem wenigstens einen ersten Druckregelmodul und/oder in der zweiten Datenverbindung der vom zweiten elektronischen Steuergerät gebildete weitere zweite Bremssollwert nicht mehr unterdrückt bzw. von dem vom ersten elektronischen Steuergerät erzeugten zweiten Bremssollwert überschrieben, sondern in das wenigstens eine zweite Druckregelmodul eingesteuert, um wenigstens an den Rädern einer Achse bzw. einer Diagonale einen entsprechenden geregelten Bremsdruck zu erzeugen, welcher das wenigstens eine zweite Druckregelmodul zugeordnet ist.

Falls aber ein Fehler in dem zweiten elektrischen Bremssteuerkreis detektiert wird, beispielsweise in der zweiten elektrischen Energieversorgung, in dem zweiten elektronischen Steuergerät, in der Datenverbindung zwischen dem zweiten elektronischen Steuergerät und dem wenigstens einen zweiten Druckregelmodul oder in dem wenigstens einen zweiten Druckregelmodul, dann steuert das erste elektronische Steuergerät den ersten Bremssollwert in das wenigstens eine erste Druckregelmodul ein, um wenigstens an den Rädern einer Achse bzw. einer Diagonale einen entsprechenden geregelten Bremsdruck zu erzeugen, welcher das wenigstens eine erste Druckregelmodul zugeordnet ist.

Die Fehlerdetektion erfolgt dabei dadurch, dass sich die Steuergeräte beispielsweise gegenseitig oder selbst überwachen. Bei einer Fehlerdetektion schaltet sich dann das vom Fehler betroffene Steuergerät selbst ab oder wird von dem jeweils anderen Steuergerät über die zweite Datenverbindung abgeschaltet ("fail-silent").

In den beiden oben beschriebenen Fehlerfällen bleibt jeweils ein elektrischer Betriebsbremssteuerkreis wegen der vollständigen galvanischen Entkopplung von dem anderen elektrischen Betriebsbremssteuerkreis voll funktionsfähig, so dass die gesetzlich vorgeschriebene Mindestbremswirkung erreicht werden kann.

Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt ist das Bremssystem für ein für den Anhängerbetrieb vorgesehenes Zugfahrzeug ausgebildet und beinhaltet ein elektro-pneumatisches Anhängersteuermodul mit einem elektrischen Steueranschluss und einem pneumatischen Steueranschluss beinhaltet, wobei das erste elektronische Steuergerät derart ausgebildet und mit dem elektrischen Steueranschluss des elektro-pneumatisches Anhängersteuermoduls verbunden ist, dass es zur elektrischen Steuerung der Anhängerbremsen elektrische Steuersignale in den elektrischen Steueranschluss des elektro-pneumatisches Anhängersteuermoduls einsteuert.

Darüber hinaus ist der pneumatische Steueranschluss des elektro-pneumatischen Anhängersteuermoduls vorzugsweise mit einem Bremsdruck führenden Arbeitsanschluss des wenigstens einen zweiten Druckregelmoduls des zweiten elektrischen Bremssteuerkreises verbunden, wobei der Bremsdruck einen Steuerdruck zur pneumatischen Steuerung des Anhängersteuermoduls bildet.

Bei intakten Bremssteuerkreisen ist das Anhängersteuermodul daher sowohl elektrisch (durch die vom ersten Steuergerät ausgesteuerten elektrischen Signale) als auch pneumatisch (durch den vom zweiten Druckregelmodul ausgesteuerten Bremsdruck) gesteuert.

Im Falle eines Fehlers in dem führenden ersten elektrischen Bremssteuerkreis und/oder in der zweiten Datenverbindung ist das Anhängersteuermodul dann durch den vom zweiten Druckregelmodul des zweiten elektrischen Bremssteuerkreises ausgesteuerten Bremsdruck pneumatisch gesteuert.

Ausgangsseitig steht das Anhängersteuermodul an einen Kupplungskopf "Bremse" und an einen Kupplungskopf "Vorrat" in Verbindung, wobei die Steuerdruckluft an dem Kupplungskopf "Bremse" vorrangig abhängig von dem an dem elektrischen Steueranschluss anstehenden elektrischen Steuersignal bzw. nachrangig abhängig von dem an dem pneumatischen Steueranschluss anstehenden pneumatischen Steuersignal erfolgt.

Damit wird die vom Gesetzgeber geforderte Zweikreisigkeit der Anhängerbremssteuerung erfüllt.

Gemäß einer Weiterbildung weist das erste elektronische Steuergerät eine an den elektrischen Steueranschluss des elektro-pneumatischen Anhängersteuermoduls angeschlossene Schnittstelle auf. Dies erfolgt bevorzugt mittels einer vierten Datenverbindung als Datenbus.

Galvanisch vollständig voneinander getrennte Bremssteuerkreise können beispielsweise dadurch realisiert werden, indem die erste elektrische Energieversorgung den ersten Kanal des Fußbremsmoduls, das erste Steuergerät und das wenigstens eine erste Druckregelmodul und unabhängig davon, die zweite elektrische Energieversorgung den zweiten Kanal des Fußbremsmoduls, das zweite elektronische Steuergerät und das wenigstens eine zweite Druckregelmodul versorgt, wobei jeweils eine elektrische Versorgungsleitung von der betreffenden elektrischen Energieversorgung über das betreffende Steuergerät bis zu dem wenigstens einen, betreffenden Druckregelmodul gezogen ist.

Bei intakten elektrischen Betriebsbremssteuerkreisen sendet das wenigstens eine zweite Druckregelmodul Betriebsdaten wie z.B. Raddrehzahlen, Bremsdrücke etc. entweder zu dem zweiten elektronischen Steuergerät, welche von dort über die zweite Datenverbindung in das erste elektronische Steuergerät eingesteuert werden oder direkt über die dritte Datenverbindung zu dem ersten elektronische Steuergerät.

Besonders bevorzugt sind je Kanal des Fußbremsmoduls wenigstens zwei Mikroprozessoren sowie wenigstens zwei Sensoreinrichtungen vorgesehen, wobei die Sensoreinrichtungen eine Betätigung des Fußbremspedals parallel erfassen, jeweils ein analoges Signal erzeugen und in einen zugeordneten Mikroprozessor einsteuern, welcher aus dem analogen Signal ein digitales fahrerbremswunschabhängiges Bremsanforderungssignal erzeugt.

Dabei können sich die Mikroprozessoren eines Kanals gegenseitig überwachen und bei Detektion eines Fehlers der fehlerbehaftete Mikroprozessor ausgeschaltet werden.

Insbesondere ist wenigstens einer der Mikroprozessoren des zweiten Kanals ausgebildet, dass er auf der Basis des fahrerbremswunschabhängigen Bremsanforderungssignals einen Bremssollwerte erzeugen kann. Die Ausbildung des einen Mikroprozessors, dass er zur Bildung eines Bremssollwerts lediglich auf der Basis des fahrerbremswunschabhängigen Bremsanforderungssignals fähig ist, kann ohne großen Mehraufwand realisiert werden. Für den anderen Mikroprozessor des zweiten Kanals reicht es demgegenüber
aus, wenn er in der Lage ist, den einen, den Bremssollwert erzeugenden Mikroprozessor des zweiten Kanals hinsichtlich der Signalbildung zu überwachen bzw. dessen Signale zu plausibilisieren. Bei den überwachten bzw. plausibilisierten Signalen handelt es sich insbesondere um die aus den analogen, abhängig von der Betätigung des Fußbremspedals erzeugten Signalen der Sensoreinrichtung und in dem einen Mikroprozessor gewonnenen digitale Signale.

Gemäß einer Ausführungsform ist das erste Steuergerät in den ersten Kanal des Fußbremsmoduls integriert, wobei wenigstens einer der Mikroprozessoren des ersten Kanals ausgebildet ist, dass er auf der Basis des fahrerbremswunschabhängigen Bremsanforderungssignals einen Bremssollwert erzeugen kann, wobei die erste Datenverbindung eine interne Datenverbindung innerhalb des ersten Kanals des Fußbremsmoduls und die zweite Datenverbindung eine interne Datenverbindung zwischen den beiden Kanälen des Fußbremsmoduls ist. Wegen der bezogen auf das Fußbremsmodul internen ersten und zweiten Datenverbindungen bringt dies den Vorteil, dass keine Schnittstellen vorgesehen werden müssen. Außerdem befinden sich die erste und die zweite Datenverbindung innerhalb eines gemeinsamen Gehäuses des Fußbremsmoduls für beide Kanäle, was Schutzmaßnahmen gegen äußere Einflüsse wie Überspannungsschutz, Verpolschutz oder Kurzschlussschutz erspart.

Gemäß einer alternativen Ausführungsform kann das erste Steuergerät ein separates, zentrales Bremssteuergerät sein, wobei die erste Datenverbindung eine externe Datenverbindung zwischen dem ersten Steuergerät und dem ersten Kanal des Fußbremsmoduls ist.

Gemäß einer weiteren alternativen Ausführungsform kann das erste Steuergerät in das Steuergerät des ersten Druckregelmoduls integriert sein, wobei die erste Datenverbindung wiederum eine externe Datenverbindung zwischen dem ersten Steuergerät und dem Steuergerät des ersten Druckregelmoduls ist.

Bei den beiden zuletzt genannten Ausführungsformen ist auch die zweite Datenverbindung zwischen dem zentralen Bremssteuergerät und dem zweiten Kanal des Fußbremsmoduls ist eine externe Datenverbindung. Diese zweite Datenverbindung kann insbesondere eine digitale Datenverbindung in Form eines Datenbusses sein.

Gemäß einer Weiterbildung können das erste elektronische Steuergerät und das zweite elektronische Steuergerät ausgebildet sein, dass bei Detektion eines Fehlers in dem ersten elektronische Steuergerät oder in dem zweiten elektronische Steuergerät das von dem Fehler betroffene elektronische Steuergerät abgeschaltet wird (fail-silent). Dabei kann die Detektion von Fehlern in den elektronischen Steuergeräten durch Selbstüberwachung der elektronischen Steuergeräte oder durch Fremdüberwachung durch das jeweils andere Steuergerät erfolgen.

Die Erfindung bezieht sich auch auf ein Fahrzeug beinhaltend ein oben beschriebenes Bremssystem und insbesondere auf ein für den Anhängerbetrieb vorgesehenes Zugfahrzeug.

Genaueres geht aus der folgenden Beschreibung der Ausführungsbeispiele hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: einen schematischen Funktionsschaltplan eines Bremssystems für ein für den Anhängerbetrieb vorgesehenes Zugfahrzeug gemäß einer bevorzugten Ausführungsform der Erfindung;
- Fig.2: einen schematischen Funktionsschaltplan eines Bremssystems für ein für den Anhängerbetrieb vorgesehenes Zugfahrzeug gemäß einer weiteren Ausführungsform der Erfindung;
- Fig.3: einen schematischen Funktionsschaltplan eines Bremssystems für ein für den Anhängerbetrieb vorgesehenes Zugfahrzeug gemäß einer weiteren Ausführungsform der Erfindung

### Beschreibung der Ausführungsbeispiele

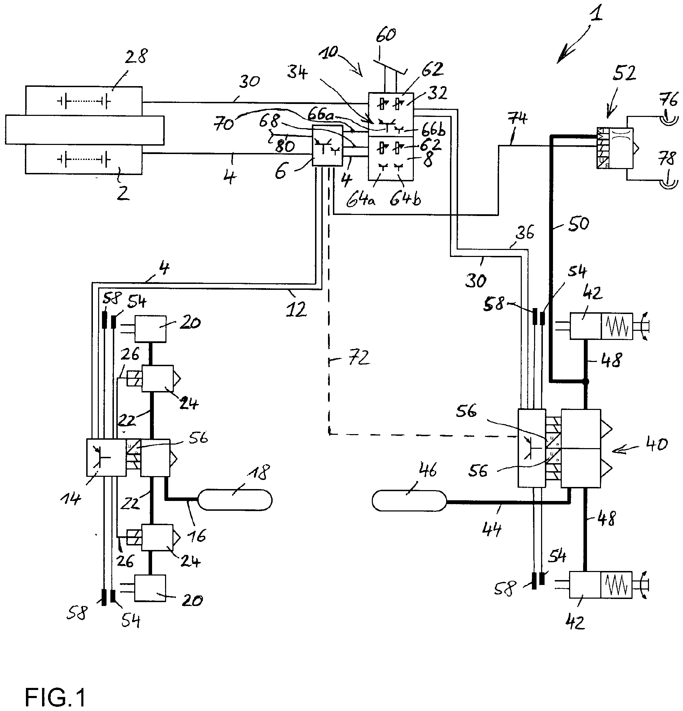

Die in Fig.1 gezeigte, bevorzugte Ausführungsform einer elektronisch geregelten elektro-pneumatischen und in Fachkreisen mit dem Kürzel EBS für "Elektronisches Bremssystem" allgemein bezeichnete Bremseinrichtung (EBS) 1 nutzt Druckluft als Druckmedium und ist hier beispielsweise für eine zweiachsige Zugmaschine mit Anhängerbetrieb vorgesehen.

Die Bremseinrichtung 1 umfasst bevorzugt einen ersten elektrischen Bremssteuerkreis und einen zweiten elektrischen Bremssteuerkreis.

Der erste elektrische Bremssteuerkreis beinhaltet eine erste elektrische Energieversorgung 2 zur Versorgung der elektrischen Komponenten des ersten elektrischen Betriebsbremssteuerkreises mit elektrischer Energie durch erste Versorgungsleitungen 4, ein erstes elektronisches Steuergerät 6, welches hier bevorzugt ein zentrales Bremssteuergerät darstellt, einen ersten Kanal 8 eines Fußbremsmoduls 10 sowie ein mit dem ersten elektronischen Steuergerät 6 über eine erste elektrische Signalleitung 12 steuerbar verbundenes erstes Druckregelmodul 14, welches hier beispielsweise ein 1-Kanal-Druckregelmodul darstellt. Von dem ersten Druckregelmodul 14 zählen die elektrischen Komponenten wie Magnetventile und elektronisches Steuergerät zu dem ersten elektrischen Bremssteuerkreis.

Das erste Druckregelmodul 14 bzw. dessen pneumatischer Teil ist über eine erste Vorratsleitung 16 an einen ersten Druckluftvorrat 18 für die Vorderachse angeschlossen und moduliert aus dem dort vorhandenen Vorratsdruck einen Vorderachsbetriebsbremsdruck in ersten pneumatischen Betriebsbremszylinder 20 der Vorderachse. In zwischen den beiden Arbeitsanschlüssen des ersten Druckregelmoduls 14 und den ersten pneumatischen Betriebsbremszylindern 20 gezogenen ersten Bremsdruckleitungen 22 sind ABS-Drucksteuerventile 24 angeordnet, welche durch vorzugsweise über das Steuergerät des ersten Druckregelmoduls 14 geschleifte ABS-Signalleitungen 26 vom ersten Steuergerät (zentrales Bremssteuergerät) angesteuert werden, um eine Bremsschlupfregelung (ABS) an den Rädern der Vorderachse durchzuführen.

Das erste Druckregelmodul 14 moduliert in bekannter Weise aus dem Vorratsdruck im ersten Druckluftvorrat 18 einen Betriebsbremsdruck an seine Arbeitsanschlüsse. Die ABS-Drucksteuerventile 24 können den vom ersten Druckregelmodul 14 ausgesteuerten Bremsdruck dann je nach Bremsschlupfsituation in bekannter Weise durchleiten, halten oder senken. Da das erste Druckregelmodul 14 hier beispielsweise nur einen Kanal aufweist, wird die Bremsschlupfregelung nach einem select-low-, select high- oder select-smart-Verfahren durchgeführt. Dabei ist der Bremsschlupf an dem Rad der Vorderachse mit dem niedrigeren Reibwert (select-low) oder mit dem höheren Reibwert (select-high) für die Bremsschlupfregelung bzw. eine Mischform aus beiden (select-smart) maßgebend.

Der zweite elektrische Bremssteuerkreis beinhaltet in analoger Weise eine zweite elektrische Energieversorgung 28 zur Versorgung der elektrischen Komponenten des zweiten elektrischen Betriebsbremssteuerkreises mit elektrischer Energie durch zweite Versorgungsleitungen 30, einen zweiten Kanal 32 des Fußbremsmoduls 10, ein zweites elektronisches Steuergerät 34, welches hier in das Fußbremsmodul 10 und insbesondere in dessen zweiten Kanal 32 integriert ist, sowie ein mit dem zweiten elektronischen Steuergerät 34 über eine zweite elektrische Signalleitung 36 steuerbar verbundenes zweites Druckregelmodul 40, welches hier beispielsweise ein 2-Kanal-Druckregelmodul für zweite pneumatische Betriebsbremszylinder 42 der Hinterachse darstellt, wobei ein Kanal für den pneumatischen Betriebsbremszylinder der rechten Seite und ein Kanal für den der linken Seite vorgesehen ist.

Das zweite Druckregelmodul 40 ist über eine zweite Vorratsleitung 44 an einen zweiten Druckluftvorrat 46 für die Hinterachse angeschlossen und moduliert aus dem dort vorhandenen Vorratsdruck je Kanal einen Hinterachsbetriebsbremsdruck für den betreffenden zweiten pneumatischen Betriebsbremszylinder (rechts, links) 42. Zwischen den beiden Arbeitsanschlüssen des zweiten Druckregelmoduls 40 und den zweiten pneumatischen Betriebsbremszylindern 42 sind zweite Bremsdruckleitungen gezogen.

Von einer der beiden zweiten Bremsdruckleitungen 48 zweigt eine pneumatische Steuerleitung 50 ab, welche an einen pneumatischen Steueranschluss eines Anhängersteuermoduls 52 angeschlossen ist.

Weil das Fußbremsmodul 10 nicht über pneumatische Kanäle sondern ausschließlich über elektrische Kanäle 8, 32 verfügt, sind auch keine pneumatischen Steuerleitungen für die beiden Druckregelmodule 14, 40 vorhanden, welche einen Backup-Steuerdruck zur Verfügung stellen könnten, der zum Einsatz kommen könnte, wenn die elektrische Bremssteuerung ausfällt. Im Gegensatz zu aus dem Stand der Technik bekannten Druckregelmodulen sind daher bei dem ersten Druckregelmodul 14 und bei dem zweiten Druckregelmodul 40 weder Backup-Magnetventile noch pneumatische Steueranschlüsse vorhanden.

Wie bei Druckregelmodulen des Stands der Technik sind jedoch elektrische Anschlüsse für den Rädern der Vorderachse und der Hinterachse zugeordnete Raddrehzahlsensoren 54 vorhanden, welche die jeweilige Raddrehzahl an in die Druckregelmodule 14, 40 integrierte elektronische Steuergeräte melden, um als Eingangsgröße für Steuer- und Regelungssysteme aller Art wie z.B. ABS, ASR, ESP usw. zu dienen. Die Funktionen bzw. Algorithmen dieser Steuer- und Regelungssysteme können dabei teilweise in den lokalen elektronischen Steuergeräten der Druckregelmodule 14, 40 implementiert sein und teilweise in einem übergeordneten elektronischen Steuergerät wie hier in dem zentralen Bremssteuergerät (erstes Steuergerät) 6 oder aber ausschließlich in Letzterem.

Weiterhin ist in den beiden Druckregelmodulen 14, 40 je Kanal ein Drucksensor 56 vorhanden, welcher den am betreffenden Arbeitsanschluss ausgesteuerten Betriebsbremsdruck als Ist-Größe misst und an die Bremsdruckregelung meldet, damit diese über die in den Druckregelmodulen 14, 40 verbauten Einlass-/Auslassmagnetventilkombination eine Anpassung an den jeweiligen Betriebsbremsdrucksollwert vornimmt. Nicht zuletzt können je Betriebsbremsaktuator z.B. in Form einer pneumatischen Scheibenbremse auch Verschleißsensoren 58 vorgesehen sein, welche den jeweils vorliegenden Bremsbelagverschleiß über das betreffende Druckregelmodul 14, 40 an das zentrale Bremssteuergerät (erstes Steuergerät) 6 die Steuergeräte der Druckregelmodule 14, 40 ebenfalls durchschleifend über die erste Signalleitung 12 und die zweite Signalleitung 36 melden. Hier sind der erste elektrische Bremssteuerkreis und der zweite elektrische Bremssteuerkreis beispielsweise den Bremsen der Vorderachse und der Hinterachse zugeordnet. Selbstverständlich könnte die Bremskreisaufteilung auch diagonal sein.

Im Fußbremsmodul 10 sind zur zweikanaligen, berührungslosen und überwachten Sensierung des Betätigungswegs bzw. des Betätigungswinkels eines Fußbremspedals 60 je Kanal 8, 32 elektronische Sensoreinrichtungen 62 redundant vorhanden, die jeweils mit Mikroprozessoren 64a, 64b bzw. 66a, 66b kommunizieren. Je Kanal 8, 32 des Fußbremsmoduls 10 sind daher zwei Sensoreinrichtungen 62 und zwei Mikroprozessoren 64a, 64b bzw. 66a, 66b vorhanden. Eine Betätigung des Fußbremspedals 60 wird mittels der beiden Sensoreinrichtungen 62 je Kanal und auch in beiden Kanälen 8, 32 parallel erfasst und zunächst analoge fahrerbremswunschabhängige Bremsanforderungssignale erzeugt, z.B. in Form von elektrischen Spannungswerten gebildet, die dann in den Mikroprozessoren 64a, 64b bzw. 66a, 66b digitalisiert und datenbusfähig gemacht werden.

Vorzugsweise überwachen sich die beiden Mikroprozessoren 64a, 64b bzw. 66a, 66b jedes Kanals 8, 32 und auch die Mikroprozessoren 64a, 64b bzw. 66a, 66b unterschiedlicher Kanäle 8, 32 gegenseitig, beispielsweise durch Plausibilisierung der von den Sensoreinrichtungen 62 erfassten und von den Mikroprozessoren 64a, 64b bzw. 66a, 66b verarbeiteten Signale, wobei bei Detektion eines Fehlers der fehlerbehaftete Mikroprozessor 64a, 64b bzw. 66a, 66b ausgeschaltet wird (fail silent).

Der erste Kanal 8 des Fußbremsmoduls 10 bzw. dessen Mikroprozessoren 64a, 64b sind über eine erste Datenverbindung 68, insbesondere einen Datenbus mit dem zentralen elektronischen Bremssteuergerät als erstes elektronisches Steuergerät 6 verbunden, welches auf der Basis des digitalen Bremsanforderungssignals einen ersten, dem ersten elektrischen Betriebsbremssteuerkreis zugeordneten Bremssollwert sowie eine zweiten, dem zweiten elektrischen Betriebsbremssteuerkreis zugeordneten Bremssollwert erzeugt.

Bei der Erzeugung der Bremssollwerte werden in dem ersten Steuergerät 6 Funktionen wenigstens eines Steuer- und/oder Regelsystems überlagert wie beispielsweise eines Fahrdynamikregelsystems, Bremsschlupfregelsystems, Antriebsschlupfregelsystems, Hillholdersystems, Fahrerassistenzsystems, Abstandsregelsystems, eines lastabhängigen Bremskraftverteilungssystems usw.. Die Liste der Steuer- und/oder Regelsysteme ist nicht vollständig. Mithin kommt jegliches Steuer- und/oder Regelsystem in Frage, welche bei der Erzeugung des Bremsdrucksollwerts eine Rolle spielen bzw. diesen beeinflussen.

Einige dieser Steuer- und/oder Regelsysteme arbeiten nicht oder nicht nur auf der Basis des fahrerbremswunschabhängigen Bremsanforderungssignals, weil sie ohne Eingriff des Fahrers bzw. ohne Betätigung des Fußbremspedals mit höheren oder überlagerten Funktionen die Betriebsbremse automatisch steuern bzw. regeln können. Zu solchen Steuer- und/oder Regelsystemen gehört beispielsweise ein Abstandsregelsystem oder auch ein Fahrdynamikregelsystem, welches die Betriebsbremsen individuell und ohne Zutun des Fahrers zuspannen und lösen. Diese Steuer- und/oder Regelsysteme beziehen ihre Eingangssignale von anderen Steuergeräten bzw. Sensoreinrichtungen wie z.B. bei einem ESP. von einem Lenkwinkelsensor, einem Gierratensensor und einem Beschleunigungssensor, um abhängig von den Eingangssignalen die Betriebsbremse zu steuern.

Ein Mikroprozessor 66a der beiden Mikroprozessoren 66a, 66b des zweiten Kanals 32 ist ausgebildet, dass er auf der Basis des fahrerbremswunschabhängigen Bremsanforderungssignals einen weiteren zweiten, dem zweiten Bremssteuerkreis zugeordneten Bremssollwert erzeugen kann. Da er über eine höhere "Intelligenz" im Vergleich zu dem anderen Mikroprozessor 66b des zweiten Kanals 32 verfügt, ist er mit einem größeren Symbol gekennzeichnet, wie aus Fig.1 hervorgeht. In diesem "intelligenteren" Mikroprozessor 66a des zweiten Kanals 32 des Fußbremsmoduls 10 ist das zweite elektronische Steuergerät 34 des zweiten elektrischen Bremssteuerkreises realisiert.

Von den beiden elektronischen Steuergeräten 6, 34 sind ausschließlich in dem zentralen Bremssteuergerät (erstes Steuergerät) 6 Steuer- und/oder Regelalgorithmen wenigstens eines Steuer- oder Regelsystems teilweise oder vollständig implementiert, welche die auf der Basis des fahrerbremswunschabhängigen Bremsanforderungssignals erzeugten ersten und zweiten Bremssollwerte verändern oder welche erste und zweite Bremssollwerte ohne Berücksichtigung oder ohne Vorhandensein des oder eines fahrerbremswunschabhängigen Bremsanforderungssignals selbständig oder automatisch erzeugen, wie dies beispielsweise bei den oben genannten Fahrdynamikregelsystemen oder Abstandsregelsystemen der Fall ist.

Dies bedeutet jedoch nicht, dass sämtliche Steuer- und/oder Regelalgorithmen eines solchen Steuer- oder Regelsystems ausschließlich in dem ersten elektronischen Steuergerät 6 bzw. dem zentralen Bremssteuergerät implementiert sind. Demgegenüber können Teile dieser Steuer- und/oder Regelalgorithmen auch in untergeordneten Steuergeräten wie beispielsweise in den Steuergeräten der Druckregelmodule 14, 40 integriert sein. Dies bedeutet vielmehr, dass in dem zweiten elektronischen Steuergerät 34 des zweiten elektrischen Bremssteuerkreises, das hier in den zweiten Kanal 32 des Fußbremsmoduls 10 bzw. in den dortigen Mikroprozessor 66a integriert ist, keinerlei Steuer- und/oder Regelalgorithmen von übergeordneten Steuer- und/oder Regelfunktionen implementiert sind. Das zweite Steuergerät 34 ist lediglich in der Lage, einzig aus dem fahrerbremswunschabhängigen Bremsanforderungssignal einen weiteren, zweiten Bremssollwert zu bilden.

Der zweite Kanal 32 des Fußbremsmoduls 10 bzw. dessen "intelligenterer" Mikroprozessor 66a ist über eine zweite Datenverbindung 70, bevorzugt einen Datenbus, mit dem ersten elektronischen Steuergerät 6 zum Datenaustausch verbunden.

Optional kann eine dritte, in den Figuren mit gestrichelter Linie dargestellte Datenverbindung 72 vorhanden sein, welche das zweite Druckregelmodul 40 der Hinterachse, das eigentlich dem zweiten elektrischen Betriebsbremssteuerkreis zugeordnet ist, direkt mit dem ersten, dem ersten elektrischen Betriebsbremssteuerkreis zugeordneten elektronischen Steuergerät 6 bzw. hier dem zentralen Bremssteuergerät zum Datenaustausch verbindet. Diese dritte Datenverbindung 72 kann ebenfalls als Datenbus ausgebildet sein.

Weiterhin steuert das zentrale Bremssteuergerät (erstes Steuergerät) 6 über eine vierte Datenverbindung 74, beispielsweise einen Datenbus, das elektro-pneumatische Anhängersteuermodul 52, indem die vierte Datenverbindung 74 dort an einen elektrischen Steueranschluss angeschlossen ist. Das Anhängersteuermodul 52 wird eingangsseitig über eine hier nicht dargestellte Vorratsdruckleitung mit Vorratsdruckluft aus einem hier ebenfalls nicht gezeigten eigenen Anhängerdruckluftreservoir mit Druckluft versorgt. Andererseits steuert das Anhängersteuermodul 52 vorrangig abhängig von dem über die vierte Datenverbindung 74 herangeführten elektrischen Steuersignal einen pneumatischen Steuerdruck für die Anhängerbremsen in einen Kupplungskopf "Bremse" 76. Bei einem Ausfall dieser elektrischen Steuerung der Anhängerbremsen kommt nachrangig der über die pneumatische Steuerleitung 50 vom Arbeitsausgang des zweiten Druckregelmoduls40 herangeführte pneumatische Steuerdruck an dem pneumatischen Steueranschluss des Anhängersteuermoduls 52 zum Tragen, aus dem dann der pneumatische Steuerdruck für die Anhängerbremsen moduliert wird. Weiterhin versorgt das Anhängersteuermodul 52 einen Kupplungskopf "Vorrat" 78 mit Vorratsdruckluft aus dem Anhängerdruckluftreservoir.

Das erste elektronische Steuergerät 6 in Form des zentralen Bremssteuergeräts und das zweite elektronische Steuergerät 34, welche über die zweite Datenverbindung 70 zum Datenaustausch miteinander verbunden sind, sind ausgebildet, in den beiden elektrischen Bremssteuerkreisen und in der zweiten Datenverbindung 70 auftretende Fehler zu detektieren.

Weiterhin weist das erste elektronische Steuergerät 6 eine an einen Fahrzeugdatenbus 80 angeschlossene Schnittstelle auf, über welche es mit anderen Fahrzeugsteuergeräten kommunizieren kann, eine an einen Anhängerdatenbus anschließbare Schnittstelle, sowie eine an den elektrischen Steueranschluss des elektro-pneumatischen Anhängersteuermoduls 52 angeschlossene Schnittstelle, die an die vierte Datenverbindung 74 angeschlossen ist.

Vor diesem Hintergrund ist die Funktionsweise der Bremseinrichtung 1 wie folgt: Bei intakten elektrischen Betriebsbremssteuerkreisen erzeugt das erste elektronische Steuergerät bzw. das zentrale Bremssteuergerät 6 zum einen den ersten Bremssollwerte (fahrerwunschabhängig oder automatisch erzeugt) und steuert ihn über die erste Signalleitung 12 in das erste Druckregelmodul 14 und zum andern den zweiten Bremssollwerts, welcher dann über die zweite Datenverbindung 70 zunächst in das zweite elektronische Steuergerät 34 im zweiten Kanal 32 des zweiten elektrischen Bremssteuerkreises eingesteuert durch das zweite Steuergerät 34 unverändert durchgeschleift und dann schließlich über die zweite Signalleitung 36 in das zweite Druckregelmodul 40 eingeleitet wird.

Diese auf der Basis des über die erste Datenverbindung 68 in das zentrale Bremsteuergerät 6 eingesteuerten fahrerbremswunschabhängigen Bremsanforderungssignals gebildeten Bremsdrucksollwerte sind dann durch die Funktionen wenigstens eines in dem zentralen Bremssteuergerät 6 vollständig oder teilweise implementierten Steuer- und/oder Regelsystems angepasst. Alternativ werden die ersten und zweiten Bremsdrucksollwerte nicht abhängig von der Betätigung des Fußbremspedals 60 und damit von dem fahrerbremswunschabhängigen Bremsanforderungssignal gebildet, sondern von einem Steuer- und/oder Regelsystem automatisch und unabhängig vom Fahrer, wie beispielsweise von einem Abstandsregelsystem.

Bei intakten elektrischen Betriebsbremssteuerkreisen wird der vom zweiten elektrischen Steuergerät 34 in Form des "intelligenten" Mikroprozessors 66a parallel gebildete, lediglich auf der Basis des fahrerbremswunschabhängigen Bremsanforderungssignals beruhende weitere zweite Bremsdrucksollwert bevorzugt unterdrückt und nicht zu dem zweiten Druckregelmodul geleitet.

Alternativ kann der weitere zweite Bremssollwert, der von dem zweiten Steuergerät 34 erzeugt wird, auch zur Plausibilisierung des vom ersten Steuergerät 6 erzeugten zweiten Bremssollwerts herangezogen werden, wobei eine Übermittlung des jeweiligen Werts oder der jeweiligen Werte bevorzugt über die zweite Datenverbindung 70 erfolgt.

Anstatt über das zweite Steuergerät 34 und die zweite Signalleitung 36 kann der vom ersten Steuergerät 6 erzeugte zweite Bremsdrucksollwert alternativ vom ersten Steuergerät 6 direkt über die dritte Datenverbindung 72 in das zweite Druckregelmodul 40 eingesteuert werden.

In den Steuergeräten der beiden Druckregelmodulen 14, 40 wird der betreffende Bremsdrucksollwert zum Soll-Ist-Wert-Abgleich in Sinne einer Bremsdruckregelung herangezogen, wobei der Istwert des Bremsdrucks jeweils von einem integrierten Drucksensor 56 ermittelt wird.

Wird ein Fehler in dem ersten elektrischen Bremssteuerkreis und/oder in der zweiten Datenverbindung 70 detektiert, beispielsweise ein Fehler in dem ersten Steuergerät 6 durch Selbstüberwachung oder durch das zweite Steuergerät 34, welches dann über die zweite Datenverbindung 70 die Überwachung des ersten elektrischen Betriebsbremssteuerkreises bzw. von dessen Komponenten vornimmt, sorgt das zweite elektronische Steuergerät 34 dafür, dass der auf der Basis des fahrerbremswunschabhängigen Bremsanforderungssignals gebildete, aber nicht durch höhere Funktionen modifizierte weitere zweiten Bremssollwert in das zweite Druckregelmodul 40 eingesteuert wird, um das Fahrzeug mit zugespannten zweiten Betriebsbremszylindern 42 der Hinterachse abzubremsen. Der fehlerhafte erste elektrische Betriebsbremssteuerkreis und damit das erste Druckregelmodul 14 verbunden mit den Bremszylindern der Vorderachse sind wegen der Störung hingegen außer Betrieb, weil das fehlerbehaftete erste Steuergerät 6 bei Detektion eines Fehlers bevorzugt abgeschaltet wird (fail silent).

Da dann die elektrische Ansteuerung des Anhängersteuermoduls 52 über die vierte Datenverbindung 74 nicht mehr funktioniert, wird das Anhängersteuermodul 52 über die pneumatische Steuerleitung 50 durch den vom zweiten Druckregelmodul 40 ausgesteuerten Bremsdruck an seinem pneumatischen Steueranschluss pneumatisch gesteuert, so dass auch ein Zuspannen der Anhängerbremsen gesichert ist.

Bei einem Fehler in dem zweiten elektrischen Bremssteuerkreis, beispielsweise in dem zweiten Steuergerät 34, sorgt das intakte erste Steuergerät 6 weiterhin dafür, dass der erste, eventuell durch höhere Funktionen eines Steuer- und/oder Regelsystems modifizierte, auf der Basis des fahrerbremswunschabhängigen Bremsanforderungssignals erzeugte Bremssollwert oder ein vom Steuer- und/oder Regelsystem automatisch erzeugter Bremssollwert in das erste Druckregelmodul 14 eingesteuert wird, um das Fahrzeug mit zugespannten ersten Betriebsbremszylindern 20 der Vorderachse abzubremsen. Der fehlerhafte zweite elektrische Bremssteuerkreis und damit das zweite Druckregelmodul 40 verbunden mit den zweiten Betriebsbremszylindern 42 der Hinterachse sind wegen der Störung hingegen außer Betrieb, weil das fehlerbehaftete zweite Steuergerät 34 bei Detektion eines Fehlers abgeschaltet wird (fail silent). Auch die elektrische Steuerung des Anhängersteuermoduls 52 ist in diesem Fall durch das intakte erste Steuergerät 6 über die vierte Datenverbindung 74 gesichert.

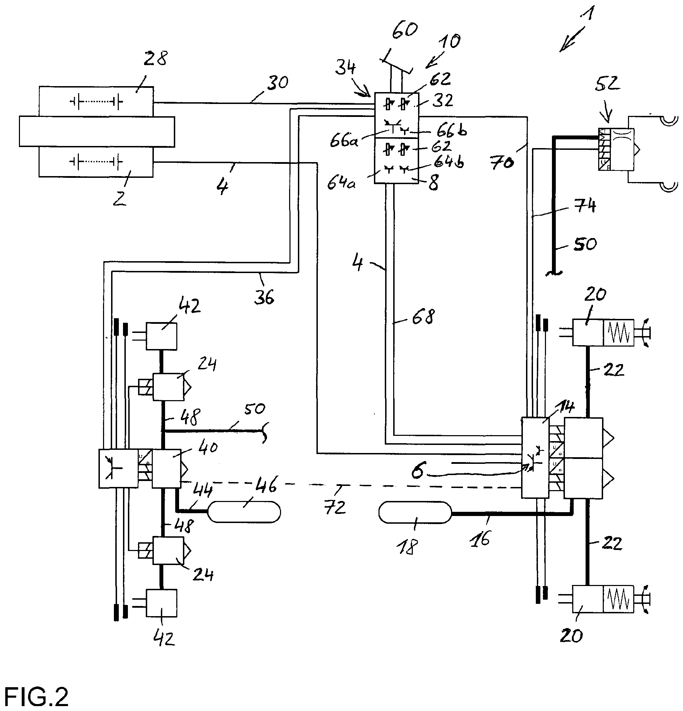

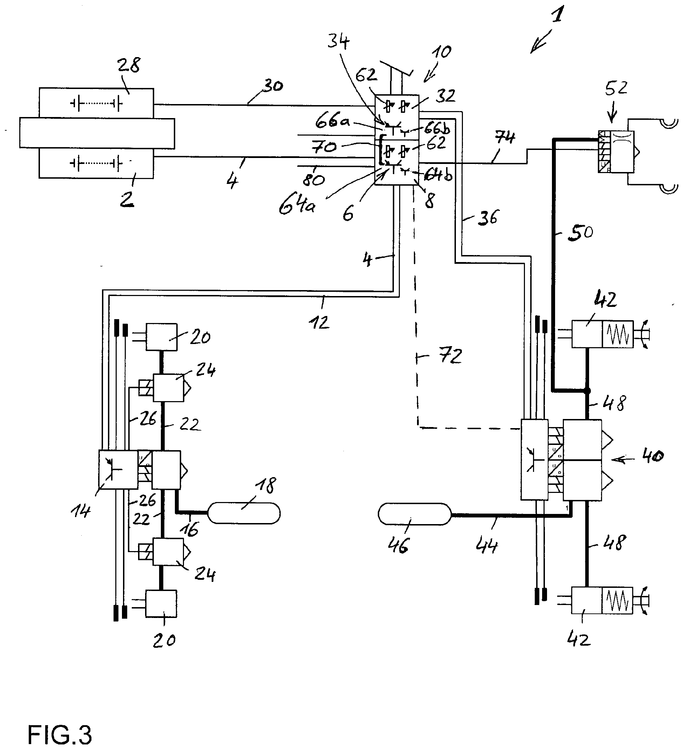

Bei den in Fig.2 und Fig.3 dargestellten weiteren Ausführungsbeispielen der Erfindung sind die in Bezug auf das oben beschriebene Ausführungsbeispiel von Fig.1 übereinstimmenden bzw. gleich wirkenden Bauteile und Komponenten mit den gleichen Bezugszahlen gekennzeichnet.

Im Unterschied zu dem Ausführungsbeispiel von Fig.1 ist gemäß Fig.2 das erste elektronische Steuergerät 6 des ersten elektrischen Bremssteuerkreises in das erste Druckregelmodul 14 integriert, insbesondere dadurch, dass der oder ein Mikroprozessor des Steuergeräts des ersten Druckregelmoduls 14 leistungsfähiger und "intelligenter" ausgestaltet wird, damit die dem ersten Steuergerät 6 unter anderem zugeordneten höheren Funktionen eines Steuer- und Regelsystems dort ablaufen können. Im Gegensatz zu Fig.1 ist das erste Steuergerät 6 daher kein eigenständiges, separates Steuergerät mehr. Dabei ist bevorzugt eine Logik vorgesehen, welche ein sicheres Abschalten des ersten Steuergeräts 6 im Falle eines Fehlers gewährleistet. Dazu wird beispielsweise ein zusätzlicher Mikroprozessor im Steuergerät des ersten Druckregelmoduls 14 vorgesehen, welcher den (Haupt) Mikroprozessor überwacht.

Ein weiterer Unterschied besteht darin, dass der erste Betriebsbremssteuerkreis anstatt ein Vorderachsbremskreis nun ein Hinterachsbremskreis und der zweite Betriebsbremssteuerkreis anstatt ein Hinterachsbremskreis ein Vorderachsbremskreis ist, wobei das erste Druckregelmodul 14 ein 2-Kanal-Druckregelmodul der Hinterachse und das zweite Druckregelmodul 40 ein 1-Kanal-Druckregelmodul der Vorderachse ist.

Nicht zuletzt zweigt die pneumatische Steuerleitung 50 für den pneumatischen Steueranschluss des Anhängersteuermoduls 52 in Fig.2 von der zweiten Bremsdruckleitung 48 zwischen dem zweiten Druckregelmodul 40 und dem zweiten Betriebsbremszylinder 42 ab. Dann ist der pneumatische Steueranschluss des elektro-pneumatischen Anhängersteuermoduls 52 mit einem Arbeitsanschluss des zweiten Druckregelmoduls 40 verbunden, an welchen ein zweiter Betriebsbremszylinder 42 angeschlossen ist.

Gegenüber dem Ausführungsbeispiel von Fig.1 können die Verkabelung und der Datenbus zwischen dem ersten Druckregelmodul 14 und dem ersten Steuergerät 6 sowie Schalter im ersten Steuergerät 6 zum Ein- und Ausschalten des ersten Druckregelmoduls 14 entfallen.

Auch beim Ausführungsbeispiel von Fig.3 sind wie bei den beiden vorangehend beschriebenen Ausführungsbeispielen je Kanal 8, 32 des Fußbremsmoduls 10 wenigstens zwei Mikroprozessoren 64a, 64b bzw. 66a, 66b sowie wenigstens zwei Sensoreinrichtungen 62 vorgesehen, wobei die Sensoreinrichtungen 62 eine Betätigung des Fußbremspedals 60 parallel erfassen, jeweils ein analoges Signal erzeugen und in einen zugeordneten Mikroprozessor 64a, 64b bzw. 66a, 66b einsteuern, welcher aus dem analogen Signal ein digitales fahrerbremswunschabhängiges Bremsanforderungssignal erzeugt. Dabei überwachen sich die Mikroprozessoren 64a, 64b bzw. 66a, 66b eines Kanals 8, 32 gegenseitig, wobei bei Detektion eines Fehlers der fehlerbehaftete Mikroprozessor 64a, 64b bzw. 66a, 66b ausgeschaltet wird. Auch ist vorzugsweise nur ein Mikroprozessor 66a der beiden Mikroprozessoren 66a, 66b des zweiten Kanals 32 ausgebildet, dass er auf der Basis des fahrerbremswunschabhängigen Bremsanforderungssignals einen weiteren zweiten Bremssollwert erzeugen kann.

Wie in Fig.2 ist auch beim Ausführungsbeispiel von Fig.3 das erste Steuergerät 6 kein eigenständiges, separates Steuergerät mehr. Vielmehr ist das erste Steuergerät 6 in den ersten Kanal 8 des Fußbremsmoduls 10 integriert, wobei ein Mikroprozessor 64a der beiden Mikroprozessoren 64a, 64b des ersten Kanals 8 das erste Steuergerät 6 darstellt und ausgebildet ist, dass er auf der Basis des fahrerbremswunschabhängigen Bremsanforderungssignals einen ersten Bremssollwert und einen zweiten Bremssollwert erzeugen kann. Dieser dann "intelligentere" und in Fig.3 deshalb größer dargestellte Mikroprozessor 64a unterscheidet sich von dem anderen Mikroprozessor 64b des ersten Kanals 8 des Fußbremsmoduls 10 auch dadurch, dass dort im fehlerfreien Betrieb die beiden elektrischen Bremssollwerte gebildet werden sowie alle höheren Funktionen wenigstens eines Steuer- und/oder Regelsystems ablaufen, was eine höhere Rechenleistung des Mikroprozessors 64a erfordert sowie zusätzliche Schnittstellen eines zentralen Steuergeräts z.B. für den Anhänger-CAN, den Fahrzeugdatenbus, und für ABS-Drucksteuerventile.

Die erste Datenverbindung 68, welche das fahrerbremswunschabhängige Bremsanforderungssignal an das erste Steuergerät 6, hier an den "intelligenteren" Mikroprozessor 64a liefert, ist dann eine "interne" Datenverbindung innerhalb dieses Mikroprozessors 64a, welcher ja auch das fahrerbremswunschabhängige Bremsanforderungssignal bildet. Gegenüber dem Ausführungsbeispiel von Fig.1 ergibt sich dann der Vorteil, dass eine Schnittstelle zwischen dem ersten Steuergerät 6, welches ein Zentralsteuergerät darstellt und dem ersten Kanal 8 des Fußbremsmoduls 10 entfallen kann. Die zweite Datenverbindung 70, welche das erste Steuergerät 6 und das zweite Steuergerät 34 verbindet, ist dann eine interne Datenverbindung zwischen den beiden Kanälen 8, 32 des Fußbremsmoduls 10 und befindet sich nun innerhalb des gemeinsamen Gehäuses des Fußbremsmoduls 10, was Schutzmaßnahmen gegen Umwelteinflüsse sowie gegen Überspannung, Verpolung und Kurzschluss einspart.

Bei einem Fehler im ersten Betriebsbremssteuerkreis, welcher über das erste Steuergerät 6 und über die vierte Datenverbindung 74 eigentlich das Anhängersteuermodul 52 elektrisch steuern würde, wird dieses nun pneumatisch über den durch die pneumatische Steuerleitung 50 vom zweiten Druckregelmodul 40 des zweiten intakten Betriebsbremssteuerkreises erzeugten Bremsdruck pneumatisch gesteuert.

### Bezugszeichenliste

- 1: Bremseinrichtung
- 2: erste Energieversorgung
- 4: erste Versorgungsleitungen
- 6: erstes Steuergerät
- 8: erster Kanal
- 10: Fußbremsmodul
- 12: erste Signalleitung
- 14: erstes Druckregelmodul
- 16: erste Vorratsleitung
- 18: erster Druckluftvorrat
- 20: erster Betriebsbremszylinder
- 22: erste Bremsdruckleitungen
- 24: ABS-Drucksteuerventile
- 26: ABS-Signalleitungen
- 28: zweite Energieversorgung
- 30: zweite Versorgungsleitungen
- 32: zweiter Kanal
- 34: zweites Steuergerät
- 36: zweite Signalleitung
- 40: zweites Druckregelmodul
- 42: zweiter Betriebsbremszylinder
- 44: zweite Vorratsleitung
- 46: zweiter Druckluftvorrat
- 48: zweite Bremsdruckleitungen
- 50: pneumatische Steuerleitung
- 52: Anhängersteuermodul
- 54: Drehzahlsensoren
- 56: Drucksensor
- 58: Verschleißsensoren
- 60: Fußbremspedal
- 62: Sensoreinrichtungen
- 64 a/b: Mikroprozessoren
- 66 a/b: Mikroprozessoren
- 68: erste Datenverbindung
- 70: zweite Datenverbindung
- 72: dritte Datenverbindung
- 74: vierte Datenverbindung
- 76: Kupplungskopf "Bremse"
- 78: Kupplungskopf "Vorrat"
- 80: Fahrzeugdatenbus

## Patentansprüche

1. Elektronisch geregeltes, elektro-pneumatisches Bremssystem (1) eines Fahrzeugs, mit mindestens zwei elektrischen Betriebsbremssteuerkreisen, wobei
a) ein erster elektrischer Betriebsbremssteuerkreis wenigstens einen ersten elektrischen Kanal (8) eines mittels eines Fußbremspedals (60) betätigbaren Fußbremsmoduls (10), wenigstens ein erstes elektronisches Steuergerät (6), wenigstens ein mit dem ersten elektronischen Steuergerät (6) steuerbar verbundenes erstes Druckregelmodul (14) sowie eine erste, elektrische Komponenten des ersten elektrischen Betriebsbremssteuerkreises mit elektrischer Energie versorgende elektrische Energieversorgung (2) und ein zweiter elektrischer Betriebsbremssteuerkreis jeweils unabhängig vom ersten elektrischen Betriebsbremssteuerkreis wenigstens einen zweiten elektrischen Kanal (32) des Fußbremsmoduls (10), wenigstens ein zweites elektronisches Steuergerät (34), wenigstens ein mit dem ersten elektronischen Steuergerät (6) steuerbar verbundenes zweites Druckregelmodul (40) sowie eine zweite elektrische Energieversorgung (28) aufweist, welche elektrische Komponenten des zweiten elektrischen Betriebsbremssteuerkreises mit elektrischer Energie versorgt, wobei
b) das erste elektronische Steuergerät (6) über eine erste Datenverbindung (68) des ersten elektrischen Betriebsbremssteuerkreises an den ersten Kanal (8) des elektronischen Fußbremsmoduls (10) und das zweite elektronische Steuergerät (34) an den zweiten Kanal (32) des elektronischen Fußbremsmoduls (10) zum Einsteuern eines fahrerbremswunschabhängigen Bremsanforderungssignals von den Kanälen (8, 32) in die Steuergeräte (6, 34) bei einer Betätigung des Fußbremspedals (60) angeschlossen ist, wobei
c) das erste elektronische Steuergerät (6) und das zweite elektronische Steuergerät (34) über eine zweite Datenverbindung (70) miteinander verbunden und ausgebildet sind, in den beiden elektrischen Betriebsbremssteuerkreisen und in der zweiten Datenverbindung (70) auftretende Fehler zu detektieren, und wobei
d) die elektronischen Steuergeräte (6, 34) ausgebildet sind, um wenigstens auf der Basis des fahrerbremswunschabhängigen Bremsanforderungssignals wenigstens einen Bremssollwert für das wenigstens eine erste Druckregelmodul (14) und/oder für das wenigstens eine zweite Druckregelmodul (40) zu erzeugen, und wobei
e) die Druckregelmodule (14, 40) jeweils ausgebildet sind, um auf der Basis eines Bremssollwerts einen Bremsdruck zu erzeugen, welcher in jeweils wenigstens einen zugeordneten pneumatischen Betriebsbremszylinder (20, 42) einsteuerbar ist, und wobei
f) das zweite elektronische Steuergerät (34) in das Fußbremsmodul (10) integriert ist, wobei
g) das erste elektronische Steuergerät (6) ausgebildet ist, dass es auf der Basis des fahrerbremswunschabhängigen Bremsanforderungssignals einen ersten, dem ersten elektrischen Betriebsbremssteuerkreis zugeordneten Bremssollwert und einen zweiten, dem zweiten elektrischen Betriebsbremssteuerkreis zugeordneten Bremssollwert erzeugt, und dass
h) das zweite elektronische Steuergerät (34) ausgebildet ist, dass es auf der Basis des fahrerbremswunschabhängigen Bremsanforderungssignals einen weiteren zweiten, dem zweiten elektrischen Betriebsbremssteuerkreis zugeordneten Bremssollwert erzeugt, und wobei
i) die elektronischen Steuergeräte (6, 34) weiterhin derart ausgebildet sind, dass
i1) bei intakten elektrischen Betriebsbremssteuerkreis das erste elektronische Steuergerät (6)
i11) den ersten Bremssollwert in das wenigstens eine erste Druckregelmodul (14) und den zweiten Bremssollwert über die zweite Datenverbindung (70) in das zweite elektronische Steuergerät (34) einsteuert, über welches der zweite Bremssollwert in das wenigstens eine zweite Druckregelmodul (40) durchgeschleift wird, oder
i12) den ersten Bremssollwert in das wenigstens eine erste Druckregelmodul (14) und den zweiten Bremssollwert direkt über eine dritte Datenverbindung (72) in das wenigstens eine zweite Druckregelmodul (40) einsteuert,
i2) bei Detektion eines Fehlers oder bei Auftreten eines Fehlers in dem ersten elektrischen Bremssteuerkreis und/oder in der zweiten Datenverbindung (70) das zweite elektronische Steuergerät (34) den lediglich auf der Basis des fahrerbremswunschabhängigen Bremsanforderungssignals gebildeten weiteren zweiten, dem zweiten elektrischen Betriebsbremssteuerkreis zugeordneten Bremssollwert in das wenigstens eine zweite Druckregelmodul (40) einsteuert, und
i3) bei einem Fehler in dem zweiten elektrischen Bremssteuerkreis das erste elektronische Steuergerät (6) den ersten Bremssollwert in das wenigstens eine erste Druckregelmodul (14) einsteuert,
**dadurch gekennzeichnet, dass**
j) von den beiden elektronischen Steuergeräten (6, 34) ausschließlich in dem ersten elektronischen Steuergerät (6) Steuer- und/oder Regelalgorithmen wenigstens eines Steuer- oder Regelsystems teilweise oder vollständig implementiert sind, welche den ersten Bremssollwert und den zweiten Bremssollwert im Sinne der Steuer- und/oder Regelalgorithmen anpassen oder welche einen ersten, dem ersten elektrischen Betriebsbremssteuerkreis zugeordneten Bremssollwert und einen zweiten, dem zweiten elektrischen Betriebsbremssteuerkreis zugeordneten Bremssollwert ohne Berücksichtigung oder ohne Vorhandensein des oder eines fahrerbremswunschabhängigen Bremsanforderungssignals automatisch erzeugen.

2. Bremssystem nach Anspruch 1, **dadurch gekennzeichnet, dass** das wenigstens eine Steuer- oder Regelsystem eines der folgenden Systeme ist: Ein Fahrdynamikregelsystem, ein Bremsschlupfregelsystem, ein Antriebsschlupfregelsystem, ein Hillholdersystem, ein Fahrerassistenzsystem, ein Abstandsregelsystem.

3. Bremssystem nach Anspruch 1 oder 2, **dadurch gekennzeichnet, dass** es als ein für den Anhängerbetrieb vorgesehenes Zugfahrzeug ausgebildet ist und ein elektro-pneumatisches Anhängersteuermodul (52) mit einem elektrischen Steueranschluss und einem pneumatischen Steueranschluss beinhaltet, wobei
a) das erste elektronische Steuergerät (6) derart ausgebildet und mit dem elektrischen Steueranschluss des elektro-pneumatisches Anhängersteuermoduls verbunden ist, dass es zur elektrischen Steuerung der Anhängerbremsen elektrische Steuersignale in den elektrischen Steueranschluss des elektro-pneumatisches Anhängersteuermoduls (52) einsteuert,
b) der pneumatische Steueranschluss des elektro-pneumatischen Anhängersteuermoduls (52) mit einem Bremsdruck führenden Arbeitsanschluss des wenigstens einen zweiten Druckregelmoduls (40) des zweiten elektrischen Bremssteuerkreises verbunden ist, wobei der Bremsdruck einen Steuerdruck zur pneumatischen Steuerung des Anhängersteuermoduls (52) bildet, wobei
c) bei intakten Bremssteuerkreisen das Anhängersteuermodul (52) sowohl elektrisch als auch pneumatisch gesteuert ist, und
d) bei einem Fehler in dem ersten elektrischen Bremssteuerkreis und/oder in der zweiten Datenverbindung (70) das Anhängersteuermodul (52) durch den vom zweiten Druckregelmodul (40) des zweiten elektrischen Bremssteuerkreises ausgesteuerten Bremsdruck pneumatisch gesteuert ist.

4. Bremssystem nach einem der vorhergehenden Ansprüche, **dadurch gekennzeichnet, dass** bei intakten elektrischen Betriebsbremssteuerkreisen der von dem zweiten elektronischen Steuergerät gebildete weitere zweite Bremssollwert zurückgehalten oder zur Plausibilisierung des vom ersten elektronischen Steuergerät erzeugten zweiten Bremssollwerts herangezogen wird.

5. Bremssystem nach einem der vorhergehenden Ansprüche, **dadurch gekennzeichnet, dass** die erste elektrische Energieversorgung (2) den ersten Kanal (8) des Fußbremsmoduls (10), das erste Steuergerät (6) und das wenigstens eine erste Druckregelmodul (14) und unabhängig davon, die zweite elektrische Energieversorgung (28) den zweiten Kanal (32) des Fußbremsmoduls (10), das zweite elektronische Steuergerät (34) und das wenigstens eine zweite Druckregelmodul (40) versorgt, wobei jeweils eine elektrische Versorgungsleitung (4, 30) von der betreffenden elektrischen Energieversorgung (2, 28) über das betreffende Steuergerät (6, 34) bis zu dem wenigstens einen, betreffenden Druckregelmodul (14, 40) gezogen ist.

6. Bremssystem nach einem der vorhergehenden Ansprüche, **dadurch gekennzeichnet, dass** bei intakten elektrischen Betriebsbremssteuerkreisen das wenigstens eine zweite Druckregelmodul (40) Betriebsdaten entweder zu dem zweiten elektronischen Steuergerät (34) sendet, welche von dort über die zweite Datenverbindung (70) in das erste elektronische Steuergerät (6) eingesteuert werden oder direkt über die dritte Datenverbindung (72) zu dem ersten elektronische Steuergerät (6).

7. Bremssystem nach einem der vorhergehenden Ansprüche, **dadurch gekennzeichnet, dass** je Kanal (8, 32) des Fußbremsmoduls (10) wenigstens zwei Mikroprozessoren (64a, 64b; 66a, 66b) sowie wenigstens zwei Sensoreinrichtungen (62) vorgesehen sind, wobei die Sensoreinrichtungen (62) eine Betätigung des Fußbremspedals (60) parallel erfassen, jeweils ein analoges Signal erzeugen und in einen zugeordneten Mikroprozessor (64a, 64b; 66a, 66b) einsteuern, welcher aus dem analogen Signal ein digitales fahrerbremswunschabhängiges Bremsanforderungssignal erzeugt.

8. Bremssystem nach Anspruch 7, **dadurch gekennzeichnet, dass** sich die Mikroprozessoren (64a, 64b; 66a, 66b) eines Kanals (8, 32) oder verschiedener Kanäle (8, 32) gegenseitig überwachen und bei Detektion eines Fehlers der fehlerbehaftete Mikroprozessor ausgeschaltet wird.

9. Bremssystem nach Anspruch 7 oder 8, **dadurch gekennzeichnet, dass** wenigstens einer der Mikroprozessoren (66a) des zweiten Kanals (32) ausgebildet ist, dass er auf der Basis des fahrerbremswunschabhängigen Bremsanforderungssignals einen Bremssollwert erzeugen kann.

10. Bremssystem nach einem der Ansprüche 7 bis 9, **dadurch gekennzeichnet, dass** das erste Steuergerät (6) in den ersten Kanal (8) des Fußbremsmoduls (10) integriert ist, wobei wenigstens ein Mikroprozessor (64a) der Mikroprozessoren (64a, 64b) des ersten Kanals (8) ausgebildet ist, dass er auf der Basis des fahrerbremswunschabhängigen Bremsanforderungssignals ein ersten Bremssollwert und einen zweiten Bremssollwert erzeugen kann, wobei die erste Datenverbindung (68) eine interne Datenverbindung innerhalb des ersten Kanals (8) und die zweite Datenverbindung (70) eine interne Datenverbindung zwischen den beiden Kanälen (8, 32) des Fußbremsmoduls (10) ist.

11. Bremssystem nach einem der Ansprüche 1 bis 9, **dadurch gekennzeichnet, dass** das erste Steuergerät (6) ein separates, zentrales Bremssteuergerät ist, wobei die erste Datenverbindung (68) eine externe Datenverbindung zwischen dem ersten Steuergerät (6) und dem ersten Kanal (8) des Fußbremsmoduls (10) ist.

12. Bremssystem nach einem der Ansprüche 1 bis 9, **dadurch gekennzeichnet, dass** das erste Steuergerät (6) in das Steuergerät des ersten Druckregelmoduls (14) integriert ist, wobei die erste Datenverbindung (68) eine externe Datenverbindung zwischen dem ersten Steuergerät (6) und dem Steuergerät des ersten Druckregelmoduls (14) ist.

13. Bremssystem nach Anspruch 11 oder 12, **dadurch gekennzeichnet, dass** die zweite Datenverbindung (70) eine digitale Datenverbindung in Form eines Datenbusses ist.

14. Bremssystem nach einem der vorhergehenden Ansprüche, **dadurch gekennzeichnet, dass** das erste elektronische Steuergerät (6) und das zweite elektronische Steuergerät (34) ausgebildet sind, dass bei einer aufgrund von Selbstüberwachung oder gegenseitiger Überwachung erfolgter Detektion eines Fehlers in dem ersten elektronische Steuergerät (6) oder in dem zweiten elektronische Steuergerät (34) das von dem Fehler betroffene elektronische Steuergerät (6, 34) abgeschaltet wird (fail-silent).

15. Fahrzeug beinhaltend ein Bremssystem nach einem der vorhergehenden Ansprüche.

16. Fahrzeug nach Anspruch 15, **dadurch gekennzeichnet, dass** es ein für den Anhängerbetrieb vorgesehenes Zugfahrzeug ist.

## Claims

1. Electronically controlled electro-pneumatic brake system (1) of a vehicle, having at least two electric service brake control circuits,
a) a first electric service brake control circuit having at least one first electric channel (8) of a foot brake module (10) which can be actuated by means of a foot brake pedal (60), at least one first electronic control unit (6), at least one first pressure control module (14) which is connected controllably to the first electronic control unit (6), and a first electric energy supply (2) which supplies electric components of the first electric service brake control circuit with electric energy, and a second electric service brake control circuit having, in each case independently of the first electric service brake control circuit, at least one second electric channel (32) of the foot brake module (10), at least one second electronic control unit (34), at least one second pressure control module (40) which is connected controllably to the first electronic control unit (6), and a second electric energy supply (28) which supplies electric components of the second electric service brake control circuit with electric energy,
b) the first electronic control unit (6) being connected via a first data connection (68) of the first electric service brake control circuit to the first channel (8) of the electronic foot brake module (10), and the second electronic control unit (34) being connected to the second channel (32) of the electronic foot brake module (10) for inputting a brake request signal which is dependent on the braking intention of the driver from the channels (8, 32) into the control units (6, 34) during an actuation of the foot brake pedal (60),
c) the first electronic control unit (6) and the second electronic control unit (34) being connected to one another via a second data connection (70) and being configured to detect faults which occur in the two electric service brake control circuits and in the second data connection (70), and
d) the electronic control units (6, 34) being configured to generate at least one setpoint brake value for the at least one first pressure control module (14) and/or for the at least one second pressure control module (40) at least on the basis of the brake request signal which is dependent on the braking intention of the driver, and
e) the pressure control modules (14, 40) being configured in each case to generate a brake pressure on the basis of a setpoint brake value, which brake pressure can be input into in each case at least one associated pneumatic service brake cylinder (20, 42), and
f) the second electronic control unit (34) being integrated into the foot brake module (10),
wherein
g) the first electronic control unit (6) is configured to generate a first setpoint brake value which is assigned to the first electric service brake control circuit and a second setpoint brake value which is assigned to the second electric service brake control circuit on the basis of the brake request signal which is dependent on the braking intention of the driver, and in that
h) the second electronic control unit (34) is configured to generate a further second setpoint brake value which is assigned to the second electric service brake control circuit on the basis of the brake request signal which is dependent on the braking intention of the driver, and wherein
i) the electronic control units (6, 34) are configured, furthermore, in such a way that,
i1) in the case of an intact electric service brake control circuit, the first electronic control unit (6)
i11)inputs the first setpoint brake value into the at least one first pressure control module (14) and inputs the second setpoint brake value via the second data connection (70) into the second electronic control unit (34), via which the second setpoint brake value is looped through into the at least one second pressure control module (40), or
i12)inputs the first setpoint brake value into the at least one first pressure control module (14) and inputs the second setpoint brake value directly via a third data connection (72) into the at least one second pressure control module (40),
i2) in the case of detection of a fault or in the case of an occurrence of a fault in the first electric brake control circuit and/or in the second data connection (70), the second electronic control unit (34) inputs the further second setpoint brake value which is assigned to the second electric service brake control circuit and is formed merely on the basis of the brake request signal which is dependent on the braking intention of the driver into the at least one second pressure control module (40), and,
i3) in the case of a fault in the second electric brake control circuit, the first electronic control unit (6) inputs the first setpoint brake value into the at least one first pressure control module (14),
**characterized in that**
j) of the two electronic control units (6, 34), control and/or regulating algorithms of at least one control or regulating system are implemented partially or completely exclusively in the first electronic control unit (6), which adapt the first setpoint brake value and the second setpoint brake value in the sense of the control and/or regulating algorithms or which automatically generate a first setpoint brake value which is assigned to the first electric service brake control circuit and a second setpoint brake value which is assigned to the second electric service brake control circuit without consideration or without the presence of the or a brake request signal which is dependent on the braking intention of the driver.

2. Brake system according to Claim 1, **characterized in that** the at least one control or regulating system is one of the following systems: a vehicle dynamic control system, a brake slip control system, a drive slip control system, a hill holder system, a driver assistance system, a distance control system.

3. Brake system according to Claim 1 or 2, **characterized in that** it is configured as a tractor vehicle which is provided for trailer operation and comprises an electro-pneumatic trailer control module (52) with an electric control connector and a pneumatic control connector,
a) the first electronic control unit (6) being configured in such a way, and being connected to the electric control connector of the electro-pneumatic trailer control module in such a way that, for electric control of the trailer brakes, it inputs electric control signals into the electric control connector of the electro-pneumatic trailer control module (52),
b) the pneumatic control connector of the electro-pneumatic trailer control module (52) being connected to a brake pressure-conducting operating connector of the at least one second pressure control module (40) of the second electric brake control circuit, the brake pressure forming a control pressure for pneumatic control of the trailer control module (52),
c) in the case of intact brake control circuits, the trailer control module (52) being controlled both electrically and pneumatically, and,
d) in the case of a fault in the first electric brake control circuit and/or in the second data connection (70), the trailer control module (52) being controlled pneumatically by way of the brake pressure which is output by the second pressure control module (40) of the second electric brake control circuit.

4. Brake system according to one of the preceding claims, **characterized in that**, in the case of intact electric service brake control circuits, the further second setpoint brake value which is formed by the second electronic control unit is withheld or is used for testing the plausibility of the second setpoint brake value which is generated by the first electronic control unit.

5. Brake system according to one of the preceding claims, **characterized in that** the first electric energy supply (2) supplies the first channel (8) of the foot brake module (10), the first control unit (6) and the at least one first pressure control module (14), and, independently thereof, the second electric energy supply (28), the second channel (32) of the foot brake module (10), the second electronic control unit (34) and the at least one second pressure control module (40), in each case one electric supply line (4, 30) being laid from the relevant electric energy supply (2, 28) via the relevant control unit (6, 34) as far as the at least one, relevant pressure control module (14, 40).

6. Brake system according to one of the preceding claims, **characterized in that**, in the case of intact electric service brake control circuits, the at least one second pressure control module (40) sends operating data either to the second electronic control unit (34), which operating data are input from there via the second data connection (70) into the first electronic control unit (6), or directly via the third data connection (72) to the first electronic control unit (6).

7. Brake system according to one of the preceding claims, **characterized in that** at least two microprocessors (64a, 64b; 66a, 66b) and at least two sensor devices (62) are provided per channel (8, 32) of the foot brake module (10), the sensor devices (62) detecting an actuation of the foot brake pedal (60) in parallel, generating in each case one analog signal, and inputting it into an associated microprocessor (64a, 64b; 66a, 66b) which generates a digital brake request signal which is dependent on the braking intention of the driver from the analog signal.

8. Brake system according to Claim 7, **characterized in that** the microprocessors (64a, 64b; 66a, 66b) of one channel (8, 32) or different channels (8, 32) monitor one another and, in the case of detection of a fault, the faulty microprocessor is switched off.

9. Brake system according to Claim 7 or 8, **characterized in that** at least one of the microprocessors (66a) of the second channel (32) is configured to be able to generate a setpoint brake value on the basis of the brake request signal which is dependent on the braking intention of the driver.

10. Brake system according to one of Claims 7 to 9, **characterized in that** the first control unit (6) is integrated into the first channel (8) of the foot brake module (10), at least one microprocessor (64a) of the microprocessors (64a, 64b) of the first channel (8) being configured to be able to generate a first setpoint brake value and a second setpoint brake value on the basis of the brake request signal which is dependent on the braking intention of the driver, the first data connection (68) being an internal data connection within the first channel (8), and the second data connection (70) being an internal data connection between the two channels (8, 32) of the foot brake module (10).

11. Brake system according to one of Claims 1 to 9, **characterized in that** the first control unit (6) is a separate, central brake control unit, the first data connection (68) being an external data connection between the first control unit (6) and the first channel (8) of the foot brake module (10).

12. Brake system according to one of Claims 1 to 9, **characterized in that** the first control unit (6) is integrated into the control unit of the first pressure control module (14), the first data connection (68) being an external data connection between the first control unit (6) and the control unit of the first pressure control module (14).

13. Brake system according to Claim 11 or 12, **characterized in that** the second data connection (70) is a digital data connection in the form of a data bus.

14. Brake system according to one of the preceding claims, **characterized in that** the first electronic control unit (6) and the second electronic control unit (34) are configured, in the case of a detection of a fault in the first electronic control unit (6) or in the second electronic control unit (34) in a manner which takes place on the basis of self-monitoring or mutual monitoring, to switch off the electronic control unit (6, 34) which is affected by the fault (fail-silent).

15. Vehicle comprising a brake system according to one of the preceding claims.

16. Vehicle according to Claim 15, **characterized in that** it is a tractor vehicle which is provided for trailer operation

## Revendications

1. Système (1) de freinage électropneumatique à régulation électronique d'un véhicule, comprenant au moins deux circuits électriques de commande de frein de service, dans lequel
a) un premier circuit électrique de commande de frein de service a au moins un premier canal (8) électrique d'un module (10) de frein à pied pouvant être actionné au moyen d'une pédale (60) de frein à pied, au moins un premier appareil (6) électronique de commande, au moins un premier module (14) de régulation de la pression relié, de manière à pouvoir être commandé, au premier appareil (6) électronique de commande, ainsi qu'un premier composant électrique du premier circuit électrique de commande de frein de service, ayant une alimentation (2) en énergie électrique alimentant en énergie électrique et un deuxième circuit de commande de frein de service, indépendant du premier circuit électrique de commande de frein de service, a au moins un deuxième canal (32) électrique du module (10) de frein à pied, au moins un deuxième appareil (34) électronique de commande, au moins un deuxième module (40) de régulation de la pression relié, de manière à pouvoir être commandé, au premier appareil (6) électronique de commande, ainsi qu'une deuxième alimentation (28) en énergie électrique, laquelle alimente des composants électriques du deuxième circuit électrique de commande de frein de service en énergie électrique, dans lequel
b) le premier appareil (6) électronique de commande est raccordé, par une première liaison (68) de données du premier circuit électrique de commande de frein de service, au premier canal (8) du module (10) électronique de frein à pied, et le deuxième appareil (34) électronique de commande au deuxième canal (32) du module (10) électronique de frein à pied pour envoyer un signal de demande de freinage, dépendant du souhait de freinage du conducteur, des canaux (8, 32) aux appareils (6, 34) de commande lors d'un actionnement de la pédale (60) de frein à pied, dans lequel
c) le premier appareil (6) électronique de commande et le deuxième appareil (34) électronique de commande sont reliés entre eux par une deuxième liaison (70) de données et sont constitués pour détecter des défauts se produisant dans les deux circuits électriques de commande de frein de service et dans la deuxième liaison (70) de données et dans lequel
d) les appareils (6, 34) électroniques de commande sont constitués pour produire, au moins sur la base du signal de demande de freinage dépendant du souhait de freinage du conducteur, au moins une valeur de consigne de freinage pour le au moins un premier module (14) de régulation de la pression et/ou pour le au moins un deuxième module (40) de régulation de la pression et dans lequel
e) les modules (14, 40) de régulation de la pression sont constitués chacun pour, sur la base d'une valeur de consigne de freinage, produire une pression de frein, qui peut être entrée dans respectivement au moins un cylindre (20, 42) pneumatique de frein de service associé, et dans lequel
f) le deuxième appareil (34) électronique de commande est intégré au module (10) de frein à pied, dans lequel
g) le premier appareil (26) électronique de commande est constitué de manière à produire, sur la base du signal de demande de freinage dépendant du souhait de freinage du conducteur, une première valeur de consigne de freinage associée au premier circuit électrique de commande de frein de service et une deuxième valeur de consigne de freinage associée au deuxième circuit électrique de commande de frein de service et en ce que
h) le deuxième appareil (34) électronique de commande est constitué de manière à produire, sur la base du signal de demande de freinage dépendant du souhait de freinage du conducteur, une autre deuxième valeur de consigne de freinage associée au deuxième circuit électrique de commande de frein de service, et dans lequel
i) les appareils (6, 34) électroniques de commande sont constitués en outre de manière à ce que
i1) si le circuit électrique de commande de frein de service est intact, le premier appareil (6) électronique de commande i11) entre la première valeur de consigne de freinage dans le au moins un premier module (14) de régulation de la pression et la deuxième valeur de consigne de freinage, par l'intermédiaire de la deuxième liaison (70) de données, dans le deuxième appareil (34) électronique de commande, par lequel la deuxième valeur de consigne de freinage passe dans le au moins deuxième module (40) de régulation de la pression ou
i12) la première valeur de consigne de freinage entre dans le au moins un premier module (14) de régulation de la pression et la deuxième valeur de consigne de freinage, directement en passant par une troisième liaison (72) de données, dans le au moins un deuxième module (40) de régulation de la pression,
i2) si un défaut est détecté ou s'il apparaît un défaut dans le premier circuit électrique de commande de frein et/ou dans la deuxième liaison (70) de données, le deuxième appareil (34) électronique de commande entre dans le au moins un deuxième module (40) de régulation de la pression, l'autre deuxième valeur de consigne de freinage associée au deuxième circuit électrique de commande de frein de service et formée seulement sur la base du signal de demande de freinage dépendant du souhait de freinage du conducteur et
i3) s'il se produit un défaut dans le deuxième circuit électrique de commande de frein, le premier appareil (6) électronique de commande entre la première valeur de consigne de freinage dans le au moins un premier module (14) de régulation de la pression,
**caractérisé en ce que**
j) entre les deux appareils (6, 34) électroniques de commande, il est mis en oeuvre, en partie ou complètement, exclusivement dans le premier appareil (6) électronique de commande, des algorithmes de commande et/ou de régulation d'au moins un système de commande ou de régulation, qui adaptent la première valeur de consigne de freinage et la deuxième valeur de consigne de freinage au sens des algorithmes de commande et/ou de régulation, ou qui produisent automatiquement, sans prise en compte ou sans présence du ou d'un signal de demande de freinage dépendant du souhait de freinage du conducteur, une première valeur de consigne de freinage associée au premier circuit électrique de commande de frein de service et une deuxième valeur de consigne de freinage associée au deuxième circuit électrique de commande de frein de service.

2. Système de freinage suivant la revendication 1, **caractérisé en ce que** le au moins un système de commande ou de régulation est l'un des systèmes suivant : un système de régulation de la dynamique de marche, un système de régulation du glissement en freinage, un système de régulation du glissement en entraînement, un système d'aide au démarrage en côte, un système d'assistance à la conduite, un système de réglage de distance.

3. Système de freinage suivant la revendication 1 ou 2, **caractérisé en ce qu'**il est constitué sous la forme d'un véhicule de traction prévu pour le fonctionnement avec une remorque et **en ce qu'**il comporte un module (52) de commande de remorque électropneumatique ayant une borne électrique de commande et un raccord pneumatique de commande, dans lequel
a) le premier appareil (6) électronique de commande est constitué et est relié à la borne électrique de commande du module de commande de remorque électropneumatique, de manière à, pour la commande électrique des freins de la remorque, entrer des signaux électriques de commande dans la borne électrique de commande du module (52) de commande de remorque électropneumatique,
b) le raccord pneumatique de commande du module (52) de commande de remorque électropneumatique est relié à un raccord de travail, conduisant de la pression de frein, du au moins un deuxième module (40) de régulation de la pression du deuxième circuit électrique de commande de frein, la pression de frein formant une pression de commande pour la commande pneumatique du module (52) de commande de remorque, dans lequel
c) si les circuits de commande de frein sont intacts, le module (52) de commande de remorque est commandé tant électriquement que pneumatiquement et
d) s'il y a un défaut dans le premier circuit électrique de commande de frein et/ou dans la deuxième liaison (70) de données, le module (52) de commande de remorque est commandé pneumatiquement par la pression de frein sortant du deuxième module (40) de régulation de la pression du deuxième circuit électrique de commande de frein.

4. Système de freinage suivant l'une des revendications précédentes, **caractérisé en ce que**, si un des circuits électriques de commande de frein de service est intact, l'autre deuxième valeur de consigne de freinage, formée par le deuxième appareil électronique de commande, est retenue ou est mise à profit pour rendre vraisemblable la deuxième valeur de consigne de freinage produite par le premier appareil électronique de commande.

5. Système de freinage suivant l'une des revendications précédentes, **caractérisé en ce que** la première alimentation (2) en énergie électrique alimente le premier canal (8) du module (10) de frein à pied, le premier appareil (6) de commande et le au moins un premier module (14) de régulation de la pression, indépendamment de cela, la deuxième alimentation (28) en énergie électrique alimente le deuxième canal (32) du module (10) de frein à pied, le deuxième appareil (34) électronique de commande et le au moins un deuxième module (40) de régulation de la pression, une ligne (4, 30) électrique d'alimentation étant tirée de l'alimentation (2, 28) en énergie électrique concernée jusqu'au au moins un module (14, 40) de régulation de la pression concerné, en passant par l'appareil (6, 34) de commande concerné.

6. Système de freinage suivant l'une des revendications précédentes, **caractérisé en ce que**, si les circuits de commande de frein de service sont intacts, le au moins un deuxième module (40) de régulation de la pression envoie des données de fonctionnement soit au deuxième appareil (34) électronique de commande, lesquelles de là sont entrées par la deuxième liaison (70) de données dans le premier appareil (6) électronique de commande, soit directement en passant par la troisième liaison (72) de données au premier appareil (6) électronique de commande.

7. Système de freinage suivant l'une des revendications précédentes, **caractérisé en ce que**, pour chaque canal (8, 32) du module (10) de frein à pied, sont prévus au moins deux microprocesseurs (64a, 64b; 66a, 66b) ainsi qu'au moins deux dispositifs (62) de capteur, les dispositifs (62) de capteur détectant en parallèle un actionnement de la pédale (60) du frein à pied, produisant chacun un signal analogique et l'entrant dans un microprocesseur (64a, 64b; 66a, 66b) associé, qui produit, à partir du signal analogique, un signal numérique de demande de freinage dépendant du souhait de freinage du conducteur.

8. Système de freinage suivant la revendication 7, **caractérisé en ce que** les microprocesseurs (64a, 64b; 66a, 66b) d'un canal (8, 32) ou de divers canaux (8, 32) se contrôlent mutuellement et, à la détection d'un défaut, mettent le microprocesseur défectueux hors circuit.

9. Système de freinage suivant la revendication 7 ou 8, **caractérisé en ce qu'**au moins l'un des microprocesseurs (66a) du deuxième canal (32) est constitué de manière à pouvoir produire une valeur de consigne de freinage sur la base du signal de demande de freinage dépendant d'un souhait de frein du conducteur.

10. Système de freinage suivant l'une des revendications 7 à 9, **caractérisé en ce que** le premier appareil (6) de commande est intégré dans le premier canal (8) du module (10) de frein à pied, dans lequel au moins un microprocesseur (64a), parmi les microprocesseurs (64a, 64b), du premier canal (8) est constitué de manière à pouvoir produire, sur la base du signal de demande de freinage dépendant du souhait de freinage du conducteur, une première valeur de consigne de freinage et une deuxième valeur de consigne de freinage, la première liaison (68) de données étant une liaison de données interne au sein du premier canal (8) et la deuxième liaison (70) de données une liaison de données interne entre les deux canaux (8, 32) du module (10) de frein à pied.

11. Système de freinage suivant l'une des revendications 1 à 9, **caractérisé en ce que** le premier appareil (6) de commande est un appareil de commande de frein central distinct, la première liaison (68) de données étant une liaison de données externe entre le premier appareil (6) de commande et le premier canal (8) du module (10) de frein à pied.

12. Système de freinage suivant l'une des revendications 1 à 9, **caractérisé en ce que** le premier appareil (6) de commande est intégré dans l'appareil de commande du premier module (14) de régulation de la pression, la première liaison (68) de données étant une liaison de données externe entre le premier appareil (6) de commande et l'appareil de commande du premier module (14) de régulation de la pression.

13. Système de freinage suivant la revendication 11 ou 12, **caractérisé en ce que** la deuxième liaison (70) de données est une liaison de données numérique sous la forme d'un bus de données.

14. Système de freinage suivant l'une des revendications précédentes, **caractérisé en ce que** le premier appareil (6) électronique de commande et le deuxième appareil (34) électronique de commande sont constitués de manière **en ce que**, lors d'une détection, effectuée en raison de l'autocontrôle ou du contrôle mutuel, d'un défaut dans le premier appareil (6) électronique de commande ou dans le deuxième appareil (34) électronique de commande, l'appareil (6, 34) électronique de commande concerné par le défaut soit mis hors circuit (fail-silent).

15. Véhicule comportant un système de freinage suivant l'une des revendications précédentes.

16. Véhicule suivant la revendication 15, **caractérisé en ce que** c'est un véhicule de traction prévu pour un fonctionnement avec une remorque.
